# EUROPÄISCHE PATENTSCHRIFT

(11) **EP 1 166 694 B1**
(45) Veröffentlichungstag und Bekanntmachung des Hinweises auf die Patenterteilung: **15.08.2007**
(21) Anmeldenummer: 01110406.4
(22) Anmeldetag: 27.04.2001
(51) Int. Cl.: A47J 27/16, A47J 39/00

(54) **Dampfgargerät mit Vorheizung**
Steam cooking vessel with preheating
Récipient de cuisson à la vapeur avec préchauffage

(30) Priorität: 20.06.2000 CH 12202000
(43) Veröffentlichungstag der Anmeldung: 02.01.2002
(73) Patentinhaber: V-Zug AG, CH-6301 Zug (CH)
(72) Erfinder: Dubach, Urs, 5647 Oberrüti (CH); Bürgelin, Heidrun, 6330 Cham (CH)
(74) Vertreter: Blum, Rudolf Emil

(56) Entgegenhaltungen:
- EP-A- 0 768 055
- US-A- 4 856 422

## Beschreibung

Die Erfindung betrifft ein Dampfgargerät gemäss Oberbegriff von Anspruch 1.

Bei Dampfgargeräten dieser Art, wie sie z.B. in EP 768 055 oder DE-OS 27 31 191 beschrieben sind, wird dem Garraum Dampf zugeführt, um den Garraum und das darin liegende Gargut zu erwärmen. Im Garraum herrscht dabei im wesentlichen Umgebungsdruck, d.h. der Garraum ist über eine Öffnung mit der Umgebung verbunden.

Es zeigt sich, dass der Wasserverbrauch derartiger Geräte recht hoch ist, und es stellt sich die Aufgabe, diesen zu reduzieren.

Diese Aufgabe wird vom Dampfgargerät gemäss Anspruch 1 gelöst.

Erfindungsgemäss ist das Gerät also so ausgestaltet, dass der Garraum ohne Dampf vorgeheizt wird. Es zeigt sich, dass auf diese Weise der Wasserverbrauch drastisch reduziert werden kann, da der Dampf erst nach dem Vorheizen in den Garraum geführt wird und deshalb wesentlich geringere Tendenz zur Kondensatbildung zeigt.

Da die Vorheiztemperatur unterhalb der Siedetemperatur liegt, kommt es zu keiner Verpuffung des einströmenden Dampfes.

In der Vorheizphase wird die Garraumtemperatur vorzugsweise von einem Regelkreis auf der Vorheiztemperatur gehalten, so dass bei Beginn des Dampfeintritts eine definierte Temperatur im Garraum herrscht.

Zum Vorheizen kann z.B. eine Heizung mit Ventilator verwendet werden, wobei Luft vom Garraum über die Heizung und zurück zum Garraum geführt wird. Zusätzlich oder alternativ hierzu kann im Garraum eine Decken- und/oder Bodenheizung vorgesehen sein.

Weitere bevorzugte Ausführungen der Erfindung ergeben sich aus den abhängigen Ansprüchen sowie aus der nun folgenden Beschreibung anhand der Figuren. Dabei zeigen:
Fig. 1 den schematischen, nicht massstabgetreuen Aufbau eines Dampfgargeräts,
Fig. 2 den Temperaturverlauf im Garraum beim Aufheizen und
Fig. 3 den Regelverlauf der Garraumtemperatur.

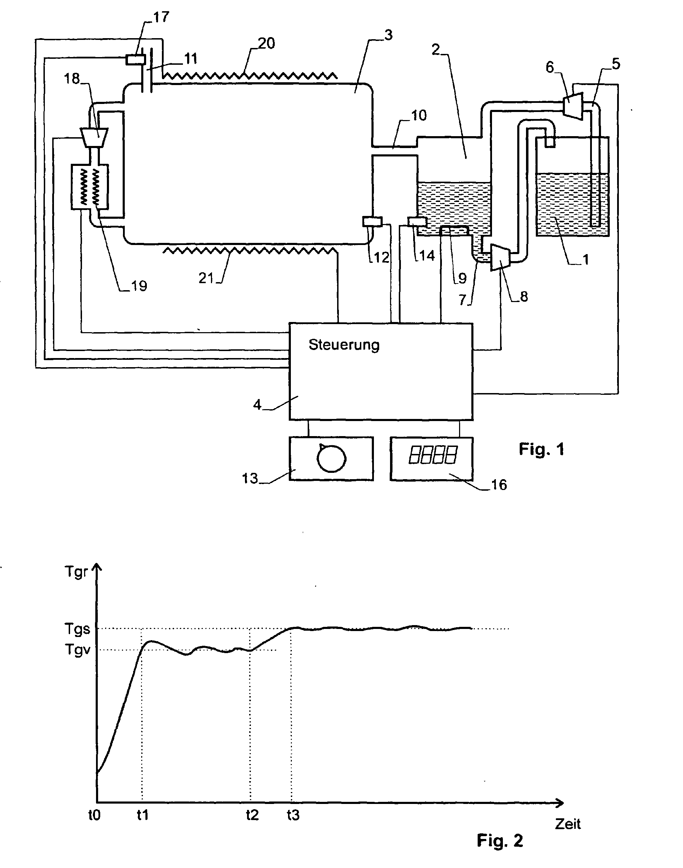

Der Grundaufbau einer bevorzugten Ausführung des Dampfgargeräts ergibt sich aus Fig. 1. Das Gerät besitzt, in einem nicht dargestellten Gehäuse, einen Wasserbehälter 1, einen als Dampferzeuger 2 verwendeten Boiler, einen Garraum 3 und eine Steuerung 4.

Der Wasserbehälter 1 ist vorzugsweise ein schubladenartiger Einsatz, der eine Vorratsmenge Wasser fasst. Über ein Ansaugrohr 5 und eine Ansaugpumpe 6 kann dem Wasserbehälter 1 Wasser entnommen und zum Dampferzeuger 2 geführt werden. Nach dem Betrieb kann im Dampferzeuger 2 verbleibendes Wasser über eine Abflussleitung 7 und eine Abflusspumpe 8 zurück zum Wasserbehälter 1 gepumpt werden.

Im Dampferzeuger 2 ist eine Heizschlange 9 angeordnet, die von der Steuerung 4 bei Bedarf mit Strom versorgt wird. Wird das Wasser im Dampferzeuger 2 zum Kochen gebracht, so strömt Dampf über eine Leitung 10 in den Garraum 3 und erwärmt das Gargut. Überschüssiger Dampf entweicht durch eine Öffnung 11.

Sinkt das Wasserniveau im Dampferzeuger 2 unter eine gewisse Grenze, so schaltet die Steuerung 4 im Normalbetrieb die Pumpe 6 ein, so dass Wasser vom Wasserbehälter 1 nachfliesst. Hierzu ist im Dampferzeuger 2 ein nicht gezeigter Niveausensor angeordnet.

Zur Regelung der Temperatur Tgr im Garraum ist ein Garraum-Temperatursensor 12 vorgesehen.

Ferner ist ein weiterer Temperatursensor 17 vorgesehen, welcher die Austrittstemperatur Tx an der Öffnung 11 misst. Es zeigt sich, dass die Austrittstemperatur Tx ansteigt, sobald Dampf durch die Öffnung 11 auszutreten beginnt. Ein Dampfaustritt kann deshalb z.B. erkannt werden, indem die Temperatur Tx mit einem Schwelltemperaturwert Txs im Bereich von z.B. 60 - 70 °C verglichen wird. Ist Tx > Txs, so tritt Dampf durch die Öffnung 11 aus. Ein derartiger Dampfaustritt ist wegen des entsprechenden Wasser- und Energieverlusts unerwünscht.

Weiter besitzt das Dampfgargerät eine Eingabeeinheit 13, an welcher der Benutzer die gewünschte Solltemperatur Tgs des Garraums 3 einstellen kann.

Der Garraum 3 ist ausserdem über einen Ventilator 18 mit einer Heizung 19 verbunden. Ist der Ventilator eingeschaltet, so wird Luft aus dem Garraum 3 abgesaugt, durch die Heizung 19 geführt und wieder in den Garraum 3 zurückgeblasen. Ferner sind am Garraum 3 eine Deckenheizung 20 und eine Bodenheizung 21 angeordnet, mit denen die Decke bzw. der Boden des Garraums 3 geheizt werden kann. Alternativ oder zusätzlich hierzu können auch seitlich angeordnete Heizungen zum Heizen der Seitenwände vorgesehen sein.

Die Heizung 19 und optional die Deckenheizung 20 und die Bodenheizung 21 können unter anderem dazu verwendet werden, den Garraum vor dem Dampfgaren vorzuheizen. Dabei wird der Garraum 3 auf eine Vorheiztemperatur Tgv vorgeheizt, bevor Dampf zugeführt wird. Diese Vorheiztemperatur liegt vorzugsweise 1 bis 10°C, insbesondere ca. 5°C unter der Solltemperatur Tgs. Dampf wird erst in den Garraum geführt, wenn die Vorheiztemperatur Tgv erreicht ist. Wie eingangs beschrieben, kann dadurch vermieden werden, dass zuviel Kondensat ausfällt oder dass eine Verpuffung des Dampfs stattfindet.

Der Ablauf des Vorheizens ist in Fig. 2 anhand des Verlaufs der Garraumtemperatur Tgr dargestellt.

Zum Zeitpunkt t0 wird der Heizvorgang gestartet. Zu diesem Zeitpunkt werden der Ventilator 18 und die Heizung 19 eingeschaltet, und es können auch die Deckenheizung 20 und die Bodenheizung 21 eingeschaltet werden. Ausserdem wird die Heizung 9 des Dampferzeugers eingeschaltet.

Somit wird der Garraum 3 erwärmt, gleichzeitig steigt auch die Temperatur im Dampferzeuger 2 an, letztere in der Regel allerdings langsamer. In der Steuerung 4 ist ein Regelkreis aktiv, der die Garraumtemperatur Tgr auf die Vorheiztemperatur Tgv einzustellen sucht, indem die Leistung der Heizung 19 entsprechend geregelt wird. Das Vorheizen wird also ohne Dampf durchgeführt.

In Fig. 2 wird die Vorheiztemperatur Tgv zum Zeitpunkt t1 erreicht. Diese Temperatur wird nun gehalten, bis das Wasser im Dampferzeuger 2 zu kochen beginnt und Dampf über Leitung 10 in den Garraum 3 tritt. Dies führt ab Zeitpunkt t2 zu einem Temperaturanstieg, bis zum Zeitpunkt t3 die Solltemperatur Tgs erreicht wird. Nun wird die Garraumtemperatur Tgr über die Heizleistung des Dampferzeugers 2 geregelt und die Heizung 19 ist ausgeschaltet. In der Steuerung 4 ist jetzt ein zweiter Regelkreis aktiv, welcher die Signale der Temperatursensoren 12 und 17 überwacht und die Heizleistung entsprechend regelt. Die Heizung 9 wird nur eingeschaltet, wenn die Bedingungen Tgr < Tgs und Tx < Txs erfüllt sind, d.h. wenn die Garraumtemperatur Tgr unter der Solltemperatur Tgs und die Temperatur Tx bei der Austrittsöffnung 11 unterhalb des Schwelltemperaturwerts Txs ist.

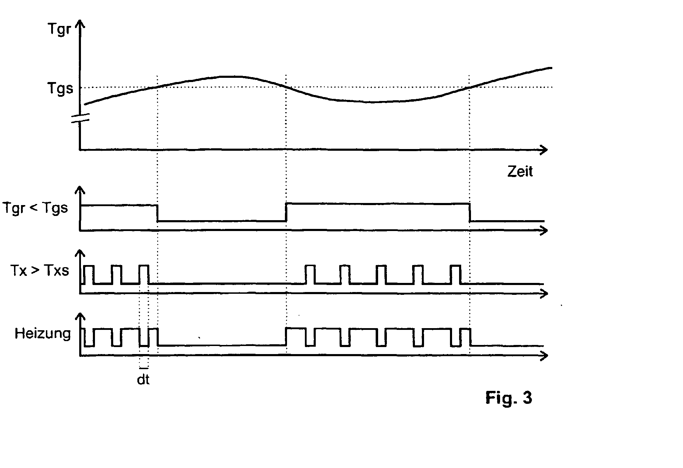

Dies ist in Fig. 3 dargestellt, wobei die oberste Kurve den Verlauf der Garraumtemperatur Tgr, die nächst untere Kurve das Resultat des Vergleichs Tgr < Tgs, die nächst untere Kurve das Resultat des Vergleichs Tx > Txs und die unterste Kurve den Einschaltzustand der Heizung 9 zeigt. Wie daraus ersichtlich, wird, falls Tgr < Tgs, die Heizung in Intervallen eingeschaltet, wobei jedes Einschaltintervall durch einen Dampfaustritt und somit eine Erhöhung der Temperatur Tx über den Schwelltemperaturwert Txs beendet wird.

In dieser Phase können die Decken- und Bodenheizung 20 bzw. 21 so gesteuert sein, dass sie immer eingeschaltet werden, sobald die Heizung 9 eingeschaltet wird, und dass sie nach einem Ausschalten der Heizung 9 noch gewisse Zeit, z.B. 3 Minuten, eingeschaltet bleiben. Dadurch wird sichergestellt, dass die Decke und der Boden des Garraums 3 warm sind, wenn Dampf eintritt, so dass die Kondensation reduziert wird.

Im oben beschriebenen Ausführungsbeispiel wird die Heizung 9 aufgrund der von den Temperatursensoren 12 und 17 gemessenen Temperaturen ein- und ausgeschaltet. Diese Regelung kann jedoch verfeinert werden, indem die Betriebsleistung der Heizung 9 kontinuierlich oder zumindest in einer Vielzahl unterschiedlicher Stufen gewählt wird. Die Heizleistung wird ermittelt, indem die Zeit dt gemessen wird, während welcher der Dampf durch die Öffnung 11 austritt, d.h. während welcher Tx > Txs. Ist diese Zeit gross, so ist dies ein Anzeichen dafür, dass die Dampferzeugungsrate und somit die Betriebsleistung der Heizung 9 zu hoch ist. In diesem Fall wird die Leistung der Heizung 9 herabgesetzt, d.h. die Heizung 9 wird, wenn sie eingeschaltet ist, mit geringerer Heizleistung betrieben. Dadurch kann ein unnötig hoher Dampfverlust vermieden werden.

## Patentansprüche

1. Dampfgargerät zum Erwärmen von Gargut bei Umgebungsdruck, mit einem Dampferzeuger (2), einem Garraum (3) und einer Steuerung (4), wobei das Dampfgargerät zusätzlich zum Dampferzeuger Heizmittel (19, 20, 21) zum dampflosen Erwärmen des Garraums (3) aufweist, und die Steuerung (4) ausgestaltet ist, um zum Aufheizen des Garraums (3) in einer Vorheizphase zuerst mit den Heizmitteln (19, 20, 21) und ohne Dampf den Garraum auf eine Vorheiztemperatur (Tgv) vorzuheizen und erst dann Dampf vom Dampferzeuger (2) in den Garraum (3) zu führen, **dadurch gekennzeichnet, dass** die Vorheiztemperatur (Tgv) tiefer als die Siedetemperatur von Wasser ist.

2. Dampfgargerät nach Anspruch 1, **dadurch gekennzeichnet, dass** die Vorheiztemperatur (Tgv) 1 bis 10°C, vorzugsweise ca. 5°C unter einer vorgegebenen Solltemperatur (Tgs) des Garraums liegt.

3. Dampfgargerät nach einem der vorangehenden Ansprüche, **dadurch gekennzeichnet, dass** ein Vorheiz-Regelkreis der Steuerung vorgesehen ist, um die Garraumtemperatur (Tgr) in der Vorheizphase ohne Dampf auf die Vorheiztemperatur (Tgv) einzuregeln.

4. Dampfgargerät nach einem der vorangehenden Ansprüche, **dadurch gekennzeichnet, dass** die Heizmittel eine Heizung (19) und einen Ventilator (18) umfassen um Luft aus dem Garraum (3) zu entnehmen, aufzuheizen und in den Garraum (3) zurückzuführen.

5. Dampfgargerät nach einem der vorangehenden Ansprüche, **dadurch gekennzeichnet, dass** die Heizmittel (19, 20, 21) eine Decken- und/oder Bodenheizung (20, 21) des Garraums (3) umfassen.

6. Dampfgargerät nach einem der vorangehenden Ansprüche, **dadurch gekennzeichnet, dass** der Garraum eine Austrittsöffnung (11) und einen bei der Austrittsöffnung (11) angeordneten Austritts-Temperatursensor (11) zum Messen der Temperatur von aus der Austrittsöffnung (11) austretenden Gases aufweist, sowie einen Garraum-Temperatursensor (12) zum Messen der Garraumtemperatur (Tgr), und dass ein Heiz-Regelkreis der Steuerung vorgesehen ist, welcher eine Heizleistung des Dampferzeugers (2) reduziert, wenn der Austritts-Temperatursensor (17) eine Austrittstemperatur (Tx) oberhalb eines Schwelltemperaturwerts (Txs) misst oder wenn der Garraum-Temperatursensor (12) eine Temperatur oberhalb einer Solltemperatur (Tgs) misst.

7. Dampfgargerät nach Anspruch 6, **dadurch gekennzeichnet, dass** die Steuerung (4) ausgestaltet ist zum Einschalten des Dampferzeugers (2) mit unterschiedlicher Heizleistung, wobei die jeweilige Heizleistung abhängig ist von der Zeitdauer, während der die Austrittstemperatur (Tx) grösser als der Schwelltemperaturwert (Txs) war.

## Claims

1. Steam cooking device for heating foodstuff under ambient pressure, with a steam generator (2), a cooking chamber (3) and a control (4), wherein the steam cooking device comprises, in addition to the steam generator, heating means (19, 20, 21) for the steam-less heating of the cooking chamber (3), and the control (4) is designed for heating the cooking chamber (3) in a pre-heating phase first by means of the heating means (19, 20, 21) and without steam to a pre-heating temperature (Tgv) and only then to lead steam from the steam generator (2) to the cooking chamber (3), **characterized in that** the pre-heating temperature (Tgv) is lower than the boiling temperature of water.

2. Steam cooking device of claim 1, **characterized in that** the pre-heating temperature (Tgv) lies 1° to 10°C, preferably approximately 5°C below a given desired temperature (Tgs) of the cooking chamber.

3. Steam cooking device of any of the preceding claims, **characterized in that** a pre-heating control-loop of the control is provided for regulating the cooking chamber temperature (Tgr) during the pre-heating phase without vapour to the pre-heating temperature (Tgv).

4. Steam cooking device of any of the preceding claims, **characterized in that** the heating means comprise a heating (19) and a fan (18) for withdrawing air from the cooking chamber (3), heating it and feeding it back to the cooking chamber (3).

5. Steam cooking device of any of the preceding claims, **characterized in that** the heating means (19, 20, 21) comprise a ceiling- and/or floor-heating (20, 21) of the cooking chamber (3).

6. Steam cooking device of any of the preceding claims, **characterized in that** the cooking chamber comprises an exit opening (11) and an exit temperature sensor (11) arranged at the exit opening (11) for measuring the temperature of gas exiting from the exit opening (11), as well as a cooking chamber temperature sensor (12) for measuring the cooking chamber temperature (Tgr), and that a heating control loop of the control is provided, which reduces a heating power of the steam generator (2) when the exit temperature sensor (17) measures an exit temperature (Tx) above a threshold temperature value (Txs) or when the cooking chamber temperature sensor (12) measures a temperature above a desired temperature (Tgs).

7. Steam cooking device of claim 6, **characterized in that** the control (4) is designed to switch on the steam generator (2) with different heating power, wherein the respective heating power depends on the duration for which the exit temperature (Tx) was larger than the threshold temperature value (Txs).

## Revendications

1. Récipient de cuisson à la vapeur pour le réchauffage d'un produit de cuisson à la pression ambiante, avec un générateur de vapeur (2), une chambre de cuisson (3) et un dispositif de commande (4), le récipient de cuisson à la vapeur comportant, en plus du générateur de vapeur, des moyens de chauffage (19, 20, 21) pour le réchauffage sans pression de la chambre de cuisson (3) et le dispositif de commande (4) étant conçu, pour le chauffage de la chambre de cuisson (3), pour préchauffer la chambre de cuisson à une température de préchauffage (Tgv) pendant une première phase de préchauffage d'abord avec les moyens de chauffage (19, 20, 21) et sans vapeur, puis après seulement, pour amener la vapeur du générateur de vapeur (2) vers la chambre de cuisson (3), **caractérisé en ce que** la température de préchauffage (Tgv) est plus basse que la température d'ébullition de l'eau.

2. Récipient de cuisson à la vapeur selon la revendication 1, **caractérisé en ce que** la température de préchauffage (Tgv) est inférieure de 1°C à 10°C, de préférence d'environ 5°C, à une température de consigne prédéterminée (Tgs) de la chambre de cuisson.

3. Récipient de cuisson à la vapeur selon l'une quelconque des revendications précédentes, **caractérisé en ce qu'**il est prévu un circuit de régulation de préchauffage du dispositif de commande pour régler la température de la chambre de cuisson (Tgr) pendant la phase de préchauffage sans vapeur à la température de préchauffage (Tgv).

4. Récipient de cuisson à la vapeur selon l'une quelconque des revendications précédentes, **caractérisé en ce que** les moyens de chauffage comprennent un radiateur (19) et un ventilateur (18) pour extraire l'air de la chambre de cuisson (3), pour le réchauffer et pour le recycler dans la chambre de cuisson (3).

5. Récipient de cuisson à la vapeur selon l'une quelconque des revendications précédentes, **caractérisé en ce que** les moyens de chauffage (19, 20, 21) comprennent un radiateur de plafond et/ou un radiateur de fond (20, 21) de la chambre de cuisson (3).

6. Récipient de cuisson à la vapeur selon l'une quelconque des revendications précédentes, **caractérisé en ce que** la chambre de cuisson comporte une ouverture de sortie (11) et un capteur de température de sortie (11) placée au niveau de l'ouverture de sortie (11) pour mesurer la température du gaz sortant par l'ouverture de sortie (11), ainsi qu'un capteur de température de chambre de cuisson (12) pour mesurer la température de la chambre de cuisson (Tgr) et **en ce qu'**il est prévu un circuit de régulation de chauffage du dispositif de commande qui réduit une puissance de chauffage du générateur de vapeur (2) lorsque le capteur de température de sortie (17) mesure une température de sortie (Tx) supérieure à une valeur de température seuil (Txs) ou lorsque le capteur de température de chambre de cuisson (12) mesure une température supérieure à une température de consigne (Tgs).

7. Récipient de cuisson à la vapeur selon la revendication 6, **caractérisé en ce que** le dispositif de commande (4) est conçu pour mettre en service le générateur de vapeur (2) avec une puissance de chauffage variable, la puissance de chauffage respective étant fonction de la durée pendant laquelle la température de sortie (Tx) était supérieure à la température seuil (Txs).
